# EUROPÄISCHE PATENTANMELDUNG

(11) **EP 3 226 186 A1**
(43) Veröffentlichungstag der Anmeldung: **04.10.2017**
(21) Anmeldenummer: 17164198.8
(22) Anmeldetag: 31.03.2017
(51) Int. Cl.: G06Q 10/06

(54) **KAPAZITÄTSANALYSE- UND -PLANUNGSWERKZEUG, INSBESONDERE FÜR EINE INFORMATIONSTECHNOLOGIE(-INFRASTRUKTUR)**

(30) Priorität: 31.03.2016 DE 202016101711 U
(71) Anmelder: DextraData GmbH, 45131 Essen (DE)
(72) Erfinder: FAGHFOURI, Shayan, 45133 Essen (DE)
(74) Vertreter: Cremer & Cremer

(57) **Zusammenfassung**

Die vorliegende Erfindung beschäftigt sich mit einem Werkzeug, durch das Kapazitätsanalysen und auch Kapazitätsprognosen erstellt und abgegeben werden können. Die Kapazitätsprognosen geben Antwort auf den zukünftigen Bedarf an eine Anlage einer IT, z. B. an eine IT-Infrastruktur (Informationstechnologie-Infrastruktur) wie an ein Rechnersystem. Die Kapazitätsanalyse untersucht das Rechnersystem. Außerdem beschäftigt sich die vorliegende Erfindung mit einem Verfahren zur Ermittlung von Kapazitätsanalysen und/oder Kapazitätsprognosen. Eine besonders vorteilhafte Modellbeschreibung hierfür ist eine Innovations State Space Model-Beschreibung.

## Beschreibung

Die vorliegende Erfindung beschäftigt sich mit einem Werkzeug, durch das Kapazitätsanalysen und auch Kapazitätsprognosen erstellt und abgegeben werden können. Die Kapazitätsprognosen geben Antwort auf den zukünftigen Bedarf an eine Anlage einer IT, z. B. an eine IT-Infrastruktur (Informationstechnologie-Infrastruktur) wie ein Rechnersystem. Die Kapazitätsanalyse untersucht das Rechnersystem. Außerdem beschäftigt sich die vorliegende Erfindung mit einem Verfahren zur Ermittlung von Kapazitätsanalysen und/oder Kapazitätsprognosen.

Mit anderen Worten, die vorliegende Erfindung behandelt ein Kapazitätsplanungswerkzeug bzw. ein Kapazitätsanalysewerkzeug nach dem Oberbegriff des Anspruchs 1 sowie nach dem Oberbegriff des Anspruchs 6. Auch wird durch die vorliegende Erfindung ein Verfahren nach dem Oberbegriff des Anspruchs 13 geschaffen.

### Stand der Technik

Interessante Druckschriften zu einzelnen Aspekten der prognostizierenden Datenermittlung sind die folgenden Druckschriften:
- DE 10 2010 029 209 B4 (Patentinhaberin: OFFIS e. V.; Anmeldetag: 18.06.2014),
- DE 11 2010 004 420 T5 (Anmelderin: International Business Machines Corp.; Prioritätstag: 21.10.2009),
- DE 601 30 352 T2 (Patentinhaberin: Wireless Valley Communications, Inc.; Prioritätstag: 25.09.2000),
- DE 10 2015 002 367 A1 (Anmelderin: Gabriele Trinkel; Prioritätstag: 02.03.2014).

Diese Druckschriften beschäftigen sich mit einzelnen Aspekten der Zurverfügungstellung von prognostizierenden Daten (predictive/prädiktive Aussagen, forecasts), die die zukünftigen Anforderungen an eine oder Ereignisse in einer IT-Infrastruktur, z. B. aus einer Vielzahl Computern oder Rechnern, auch virtuellen Rechnern, bestehend, beschreiben.

Das US-Patent US 7 369 981 B1 (Patentinhaberin: Sprint Communications Company L.P.; Anmeldetag: 22.10.2004) startet von der Überlegung, dass eine Anlage mit mehreren Computern ein gewisses "transaction volume" abarbeiten kann. Um nicht an die Kapazitätsgrenze der Computeranlage zu gelangen, sei es laut der US 7 369 981 B1 bekannt, mit Schwellwerten für die Computeranlage zu operieren. Von diesen Schwellwerten sich abwendend, schlägt die US 7 369 981 B1 vor, in einem Bearbeitungsschritt zur Ermittlung der maximalen Kapazität der Rechneranlage Korrelationswerte zu bestimmen, die durch Algorithmen auf Basis von Standardabweichungen, Ko-Varianzen und sonstigen Korrelationen zu berechnen sind. Die Figur 3 zeigt anschaulich, dass die US 7 369 981 B1 von lokalen, physisch präsenten Computern als Bezugsgröße ausgeht.

Die US 2003/046 396 A1 (Erfinder: Roger K. Richter et al.; Prioritätstag: 30.01.2002) setzt sich ebenfalls mit dem Thema "Ressourcen-Kapazität" auseinander, jedoch - statt mit dem in der US 7 369 981 B1 angesprochenen "transaction volumes" - mit der Ressourcen-Kapazität von Netzwerkverbindungen, über die ein "content", z. B. Video-Streaming-Daten, zu übertragen ist. In diesem Zusammenhang wird u. a. vorgeschlagen, auf Basis von statistischen Daten die zur Verfügung stehenden Ressourcen zu ermitteln. Die Nutzung der Netzwerkverbindung lässt sich effizienter gestalten, wenn die zu übertragenden Daten verwaltet werden, indem die Übertragung deterministisch beeinflusst wird.

Die US 8 738 972 B2 (Patentinhaberin: Dell Software Inc.; Patenterteilungstag: 27.05.2014) widmet sich dem Thema "monitoring" von Computer-Ressourcen in einer virtuellen Umgebung. Über ein GUI ("graphical user interface") soll einem Benutzer mitgeteilt werden, ob ein zukünftiger Engpass in einem Netzwerk von Computern zu erwarten ist. Hierzu werden Trenddaten aus der Vergangenheit für die Zukunftsvorhersage genutzt.

Die US 2014/278 807 A1 (Anmelderin: Cloudamize, Inc.; Veröffentlichungstag: 18.09.2014) startet bei der Idee, eine komplette Computer-Anlage in der Cloud anzusiedeln. Leistungen mit unterschiedlichen Vertrauensniveaus können zu unterschiedlichen Kosten aus der Cloud in eine Beziehung gesetzt werden. Graphisch aufbereitet wird einem Betrachter mitgeteilt, zu welchen Kosten er mit welchem Vertrauensniveau rechnen darf. Will der Nutzer seine Cloud-Computer-Anlage in einem gewissen Vertrauensniveau halten, so werden ihm andere target performance level, d. h. andere Verträge angeboten. Mit anderen Worten, es handelt sich bei der US 2014/278 807 A1 offensichtlich um ein Kostenoptimierungswerkzeug, wenn jemand seine gesamte Computeranlage aus Cloud-Diensten zusammenstellt.

In der mathematischen Fachliteratur erscheinen immer wieder Modellbeschreibungen von Innovations State Space Models, z. B. der Fachartikel "Automatic Time Series Forecasting: The forecast Package for R" der Autoren Rob J. Hyndman und Yeasmin Khandakar in Journal of Statistical Software, July 2008, Volume 27, Issue 3, wonach es eigentlich möglich sein müsste, umfassendere Aussagen zu einer zu untersuchenden IT-Infrastruktur treffen zu können.

So mag es für einzelne Systemadministratoren oder für ein Betriebssystem von besonderem Interesse sein, auf welchen Rechnerkernen welche Prozesse laufen und zukünftig laufen sollen. Diese Detailinformationen überfrachten aber häufig Personen, die auf Entscheiderebene in Unternehmen, Verbänden, Zusammenschlüssen oder Institutionen, z. B. auch in Universitäten, Planungen und Aussagen zu der IT-Infrastruktur treffen müssen.

### Aufgabenstellung

Personen, die Entscheiderpositionen bekleiden, benötigen aufbereitete Daten und Informationen, die verlässlich bei der Entscheidungsfindung helfen. Idealerweise verfügen solche Personen über einen Satz von Werkzeugen, durch die die Personen - möglichst objektiv - tragfähige Zukunftsentscheidungen zu der von Ihnen verantworteten IT-Infrastruktur (Informationstechnologie-Infrastruktur) treffen können.

### Erfindungsbeschreibung

Die erfindungsgemäße Aufgabe wird durch ein Kapazitätsplanungs- und Kapazitätsanalysewerkzeug nach Anspruch 1 gelöst. Zudem wird die erfindungsgemäße Aufgabe durch ein Kapazitätsplanungs- und Kapazitätsanalysewerkzeug nach Anspruch 6 gelöst. Ein zu dem Werkzeug äquivalentes Verfahren wird in dem Anspruch 13 vorgestellt. Vorteilhafte Weiterbildungen lassen sich den abhängigen Ansprüchen entnehmen.

Kapazitätsplanungswerkzeuge können in vielerlei Gestalt auftreten.

Kapazitätsanalysewerkzeuge können in vielerlei Gestalt auftreten.

Besonders verlockend ist das Darbieten des Kapazitätsplanungswerkzeugs als eigenständige Rechnereinheit, die in einem Verbund aus einer Vielzahl von Rechnern und Rechenzentren existieren kann. In einer solchen Konstellation gibt es einen Rechner bzw. Computer, der das Kapazitätsplanungswerkzeug darstellt bzw. auf dem das Werkzeug installiert ist.

Wird der Begriff "Rechnersystem" verwendet, so ist noch nicht festgelegt, ob es ein zentrales, ein dezentrales und/oder ein verteiltes Rechnersystem ist. Das Werkzeug lässt sich sowohl auf zentralen Rechnersystemen, die häufig auch als eigene Rechnersysteme zu bezeichnen sind, als auch auf dezentral bzw. verteilten Rechnersystemen anwenden. Mit dem Werkzeug kann ein Rechnersystem überwacht, analysiert und prognostiziert werden, das aus vielen einzelnen (Sub-)Rechnersystemen besteht.

In einer alternativen Ausgestaltung ist es natürlich auch möglich, das Kapazitätsplanungswerkzeug durch ein Software-Paket umzusetzen, das als zusätzlich zu installierendes Paket neben weiteren Software-Paketen auf einer Recheneinheit oder einem Zusammenschluss von verschiedenen Rechnereinheiten laufen soll.

In einer weiteren Alternative ist es natürlich möglich, das Kapazitätsplanungswerkzeug auf mehrere Computer - ggf. auch als virtuelle Maschinen vorhanden - zu verteilen. Eine Rechnereinheit ist für das Data-Mining zuständig. Eine Rechnereinheit ist für das Vorhalten eines Berechnungsmoduls wie dem Innovations State Space Modul zuständig. Eine weitere Rechnereinheit ist für die grafische Aufbereitung und ggf. auch für das Zurverfügungstellen der Grafiken zuständig. In einer solchen Konstellation erstreckt sich das Kapazitätsplanungswerkzeug auf eine Mehrzahl von Rechnereinheiten, wie z. B. Computern, die in ihrem Verbund das Kapazitätsplanungswerkzeug bilden.

Unterschiedlichste Überlegungen stellen Basen für vorliegendes Kapazitätsanalysewerkzeug bzw. Kapazitätsplanungswerkzeug dar. Zumindest Teile des Werkzeugs können auch als Informationsanalytikwerkzeug bezeichnet werden. Das Informationsanalytikwerkzeug bietet insbesondere die Möglichkeit, mehrmonatige Analytik und Prognostik durchzuführen. Ein solches Werkzeug lässt sich als Wachstumsplanungswerkzeug, nicht nur von Kaufleuten eines Unternehmens, einsetzen.

Eine Erkenntnis zu vorliegender Erfindung beschäftigt sich mit der Art und dem Typ von möglichen Daten für weitergehende Bearbeitungen.

Obwohl kaufmännische Daten und Datenquellen einer IT-Infrastruktur, z. B. welche Hardware-Komponenten und welche Software-Pakete und -module wie häufig an welchen Standorten, Stellen und in welchen Bereichen vorhanden sind, häufig nur von Kaufleuten ausgewertet werden, beinhalten viele kaufmännische Daten auch zahlreiche technische Informationen, die nicht mehr gesondert erhoben oder ermittelt werden müssen, sondern durch geeignete Methoden des "Data-Mining" (Datenschürfens) auch einer technischen Auswertung zur Verfügung gestellt werden können. Ist z. B. ein Zugang einer Data-Mining-Software zu den Anlagendaten erlaubt, kann diese Software des Data-Mining aus den kaufmännischen Daten der Anlagenbuchhaltung die technischen Informationen extrahieren.

Eine weitere Basis für einen Aspekt des Kapazitätsplanungswerkzeuges ruht auf der Erkenntnis, dass viele Informationen zwar eine äußerst komplexe Ausgangslage haben, jedoch in einzelne Variablen aufgeteilt, also singularisiert werden können, die insbesondere gegenüber einer Zeitbasis aufgetragen werden können. Auf diese Weise kann eine Variable, die einen Aspekt des Rechnersystems beschreibt, individualisiert in die Zukunft prognostiziert werden (multivarianter mathematischer Ausgangsraum - mehrere einvariante Antworten).

Eine weitere Basis der Erkenntnis für die vorliegende Erfindung basiert darauf, dass in einem und dem gleichen Rechnersystem parameterabhängig unterschiedlichste Prognosemethoden einschlägig sein können. Ein Innovations State Space Model, das mehrere Berechnungsmethoden umfasst und bei dem für jede Variable bzw. für jeden Parameter die geeignetste Berechnungsmethode ermittelt wird, kann besonders zuverlässige Prognosen liefern.

Eine Erkenntnis für vorliegende Erfindung fußt auf der Beobachtung, dass gängige "applications", wie z. B. mail-services, data-center-jobs, Web-Shops und/oder file services, in einer Ausgestaltung als über mehr als zwei Server verteilte applications aufbaubar sind. So kann z. B. ein Front-End, d. h. eine webbasierte Schnittstelle zur Kommunikation mit Dritten, als Cloud-Service eingebunden werden, während Datenbanken, die geschäftseigene Informationen wahren, wie z. B. Einkaufspreise für Nachbestellungen von verkauften Gütern über einen Web-Shop, auf eigenen Rechnern und/oder Servern des Rechnersystems (bzw. der Rechner-Anlage) gespeichert sind. In einer Ausgestaltung findet auf den eigenen Rechnern die logische und informationelle Bearbeitung statt.

Die Erkenntnis zu den auf Servern zu verteilenden applications auf das Beispiel mail-services übertragen, bedeutet es, dass auf einem ersten Server die SMTP-services (simple mail transport protocol services) liegen. Server für SMTP-services können z. B. als Cloud-Services eingebunden werden. Auf einem anderen Server laufen services für die Erkennung von Viren, Spam und E-Mails mit unerwünschten Inhalten, z. B. Börsenhandelsdaten. Auf einem weiteren Server laufen services, die die einzelnen E-Mails in relationale Datenbanken ablegen. Auf einem weiteren Server laufen services, die die Datenkonsistenz und das Datenbackup sicherstellen. Auf einem weiteren Server laufen services, die die Weiterleitung der E-Mails an z. B. Endbenutzergeräte zur Verfügung stellen.

Eine application "Web-Shop" kann in einer Ausgestaltung in bis zu einundzwanzig services unterteilt werden. Zentrale services, die Bestandteile des Web-Shops sind, sind die folgenden services:
Ein service ist eine geographische Datenbank, insbesondere zu Kundendaten. Ein service sammelt automatisierte Abrufe über Kreditwürdigkeiten von Kunden, insbesondere im Zusammenhang mit ihren Kundenbestellungen. Ein service sammelt, verwaltet und aktualisiert die eigentlichen Kundendaten. Ein service entspricht den Kundendatenbanken, auch die historischen. Ein service ist die Auftragsannahme. Ein service ist die Auftragsbearbeitung. Teil dieses service kann auch der Bearbeitungsstand der Warenauslieferung sein. Es kann aber auch sein, dass der "work-flow" Bearbeitungsstand in einem weiteren service zusammengefasst wird. Ein service ist die Steuerberechnung, d. h., welche Steuern für jeden Kauf abzuführen sind. Ein service ist die Warenwirtschaft. Ein service ist die Produktpräsentation. Ein service umfasst die Verwaltung von Sonderaktionen und Sonderkontingenten. Ein service führt die eigentliche Produktverwaltung durch.

Die oben benannten services können zusammengebunden werden. Die services zusammen schaffen den Web-Shop. Jeder der services kann auf einem eigenen Server laufen. Es können aber auch mehr als ein service auf einem Server angesiedelt werden. Es lassen sich einzelne services in die Cloud verlegen. Services, die besonders interessant für den Web-Shop-Betreiber sind, können auf eigenen Geräten des Rechnersystems (bzw. der Rechner-Anlage) verwaltet oder sogar abgearbeitet werden.

Größere file-service-Systeme umfassen häufig so viele Daten und files, dass diese auf mehr als einem Server abzulegen sind. Zusätzlich werden häufig file-services gespiegelt, z. B. aus Gründen der Datensicherheit, z. B. aus Gründen des schnelleren Zugriffs. Wird aus einem Rechnersystem bzw. einer Rechner-Anlage auf die file-services zugegriffen, die sich über viele Standorte verteilt, so ist es günstig, wenn die file-services auch verteilt vorhanden sind. Ein Masterdatensatz kann auf eigenen Rechnern eines Rechnersystems (bzw. einer Rechner-Anlage) liegen. Gespiegelte Datensätze können in die Cloud gelegt werden. Ein besonders weit entfernter Standort eines Unternehmens kann seine Daten aus der Cloud beziehen, während die Zentrale mit den Daten auf den eigenen Rechnern arbeitet.

Werden die Erkenntnisse und Aspekte als Ausgangspunkt der weiteren Überlegung gewählt, so kann ein vorteilhaftes, zuverlässig arbeitendes Kapazitätsanalysewerkzeug bzw. Kapazitätsplanungswerkzeug geschaffen werden.

Das Kapazitätsplanungswerkzeug soll Prognosen liefern können, in welchem Umfang Anpassungen an einer vorhandenen oder zu schaffenden Informationstechnologie-Infrastruktur (IT-Struktur) in überschaubaren Zeiträumen, wie z. B. in den nächsten Wochen, in den nächsten Monaten oder in den nächsten ein bis zwei Jahren vorzunehmen sind.

Das Kapazitätsanalysewerkzeug stellt in einer Ausgestaltung die Ist-Situation dar.

Die Komponente Kapazitätsplanungswerkzeug und die Komponente Kapazitätsanalysewerkzeug, die in einer Ausgestaltung gemeinsam, die aber auch in einer Ausgestaltung getrennt vorhanden sein können, d. h. unabhängig voneinander sein können, können als eine günstige Datenbasis Daten der Vergangenheit der IT-Anlage nutzen.

Generell kann gesagt werden, es werden unterschiedlichste Daten und Datenquellen genutzt. Rechnersysteme sind in der Regel mit einer Anzahl an Sensoren ausgestattet, über die Zustände des Rechnersystems oder Zustände der gesamten IT-Struktur bzw. IT-Infrastruktur permanent ermittelt werden können. Einige Sensoren sind Sensoren, die unmittelbar über einen Messkopf, wie einem Temperaturfühler, wie einem Gerät zur Spannungsmessung mit einem A/D-Wandler, wie einem Sensor für eine Strommessung mit einem Shunt oder wie einer Messvorrichtung für die Messung einer elektrischen Kapazität über Spannungs-Strom-Zyklen, messen. Weitere, hardwarebezogene Daten können durch indirekte Berechnungsmethoden und Methoden des permanenten "loggings" ermittelt werden. Z. B. können Belegungsverteilungen auf Festplatten und Festplattenarrays durch permanent aktualisierte "file-Tabellen" oder Allokationsverzeichnisse ermittelt werden.

Eine weitere, günstige Datenquelle für die Berechnungen innerhalb des Kapazitätsplanungswerkzeugs sind Daten, die dem kaufmännischen Bereich langläufig zugerechnet werden. Bei näherer Analyse solcher kaufmännischer Datenquellen hat sich gezeigt, dass hierzu Datensätze und Daten gehören, die nicht als rein kaufmännische Daten bezeichnet werden dürften bzw. dürfen. Mit anderen Worten, eine weitere Quelle von sinnvoll zu nutzenden Daten, die jedoch häufig brachliegen, sind die als kaufmännische Daten bezeichneten Daten, die tatsächlich häufig eine Mischung aus kaufmännischen Daten und aus technischen und/oder IT-Infrastrukturdaten darstellen bzw. bilden. Es kann ein Erkenntnisgewinn zu einer IT-Infrastruktur herbeigeführt werden, indem aus den - häufig sehr umfänglichen - kaufmännischen Daten Daten mit technischem Charakter extrahiert werden.

Bei der Erwägung, ob das Rechnersystem vollständig und komplett durch hauseigene Komponenten und Hardware aufzubauen ist, können Ressourcen von Cloud-Service-Providern hinzugenommen werden, z. B. Daten zu der von ihnen bedienbaren Bandbreite und die Daten zu garantierten Übertragungsgeschwindigkeiten von Daten. Solche Cloud-Dienste werden teilweise auch als Public-Clouds angeboten; beliebige Nutzer aus der Öffentlichkeit können sich Dienste von einem Cloud-Service-Provider in den von ihnen benötigten Umfängen hinzunehmen. Kapazitäten, insbesondere jene, die das eigene Netzwerk bzw. das eigene Rechnersystem nicht zur Verfügung stellt, können aus einer Public-Cloud hinzugenommen werden. Die Public-Cloud ergänzt die eigenen Kapazitäten.

Diese Unmengen an Daten sollten vorteilhafterweise so aufbereitet werden, dass sie von Personen, die es bevorzugen, Überblicke zu wahren, durch wenige Blicke und idealerweise in kurzer Zeit einsortiert werden können. Eine besonders angenehme und vorteilhafte Darstellungsweise sind sogenannte "reports" mit grafischen, d. h. visualisierenden Darstellungsteilen.

In einem ersten Schritt, der z. B. in einem DataMapping-Prozess stattfinden kann, jedoch auch über Module eines Data-Mining-, eines Datenbankarchivierungs- und eines Datenumwandlungssystems erfolgen kann, werden die hardwarebezogenen Daten der IT-Struktur und Daten aus kaufmännischen Datenquellen zusammengeführt.

In einem weiteren Schritt findet eine Korrelation zwischen den hardwarebezogenen Daten und den kaufmännischen Datenquellen statt. Beispielhaft sei der Zusammenhang angesprochen, dass es eine unmittelbare Abhängigkeit zwischen Anzahl und Typen von Nutzern (Nutzer bzw. Mitarbeiter der Entwicklung, der Konstruktion, des Marketing, des Designs, des Verkaufs) und einer benötigten Bandbreite einer gesamten Informationstechnologie-Infrastruktur gibt, z. B. eines Unternehmens. Arbeitet das Unternehmen sehr stark mit grafischen und Design-Elementen, so ist eine größere Netzwerkbandbreite erforderlich in dem Rechnersystem als bei Unternehmen, durch die ausschließlich kaufmännische Daten verwaltet werden. So lässt sich aus der Anzahl und der voraussichtlichen Nutzungsart eine Relation zu einzelnen Parametern des Rechnersystems herstellen. Auch kann beispielhaft angeführt werden, befinden sich in einem Rechnersystem viele Rechnereinheiten, die sehr leistungsstark ausgelegt sind, so kann von einer starken Rechenleistung des Rechnersystems ausgegangen werden. Werden dann die kaufmännischen Daten, wozu auch Daten aus der Personalabteilung gerechnet werden können, der Rechnerverteilung bzw. der Arbeitsverteilung gegenübergestellt, wonach z. B. leistungsstarke Rechnerarbeitsplätze von Konstrukteuren besetzt werden, so ist von einer hohen Rechnerauslastung der als Konstruktionsmaschinen genutzten Rechnereinheiten in einer ersten Näherung auszugehen (wobei Rechnerarbeitsplätze auch virtuelle Rechner sein können).

Diese zahlreichen Korrelationen werden aber vorteilhafterweise in dem Kapazitätsplanungswerkzeug nicht einzeln aufgeschlüsselt, sondern komprimiert in einem zur Visualisierung nutzbaren Format als ein Datensatz angeboten. Dieser Datensatz kann dann, insbesondere je nach Vorlieben der Adressaten, unterschiedlich visuell dargestellt werden (z. B. x-y-Diagramm, Tortendiagramm, Progressionskurve, Balkendiagramm usw.).

Es geht u. a. also darum, Parameter an der Hand zu haben, mit denen die Informationstechnologie-Infrastruktur, insbesondere das Rechnersystem, umfassend beschrieben werden kann. Hierbei sollte sich das Kapazitätsplanungswerkzeug aber nicht in den Details verlieren, sondern diese nur bei besonderem Wunsch oder aufgrund einer besonderen Anforderung eines Nutzers aufschlüsseln. Aus der (nahezu) Unmenge an Daten und Datenquellen sollte nach einem ersten Prozessschritt des "Data-Mining" ein Datensatz, z. B. als Teil einer oder in einer Datenbank, vorhanden sein, auf deren Basis weitere Berechnungen durchgeführt werden können. Das Berechnungsziel ist es, in einzelnen Variablen aufgelistete oder aufgeschlüsselte Rechnersystembeschreibungen zu generieren.

Als ein geeignetes Kapazitätsplanungswerkzeug haben sich Gleichungssysteme nach "Innovations State Space Models" erwiesen. Besonders leicht und schnell lassen sich "Innovations State Space Models" durchrechnen, die zumindest stückweise lineare Gleichungssysteme sind.

Vorliegend geht es also auch um ein Verfahren zur Kapazitätsanalyse und/oder Kapazitätsplanung. Hierbei kann eines der oben beschriebenen Werkzeuge eingesetzt werden. Durch die Planung lassen sich Aussagen über eine Informationstechnologie-Anlage machen. Die Aussagen charakterisieren die Informationstechnologie-Anlage. In einem Bearbeitungsschritt werden sensorische Daten eines Rechnersystems datentechnisch aufgenommen. Besonders vorteilhaft ist es, wenn die Daten in nativer Weise aufgenommen werden. Die Daten dienen für die Erzeugung eines für eine Visualisierung aufzubereitenden Datensatzes.

Die hardwarebezogenen Daten des Rechnersystems, die kaufmännischen Daten des Rechnersystems sowie Daten zu Ressourcen von Cloud-Service-Providern werden miteinander kombiniert. Hierdurch wird eine Korrelation zwischen den hardwarebezogenen Daten, den kaufmännischen Datenquellen und den Daten zu den Ressourcen der Cloud-Service-Provider hergestellt.

In einem weiteren Schritt wird eine Korrelation gebildet. Die aus der Korrelation stammenden Daten werden komprimiert. Diese werden in einem Format dargestellt, die für die Visualisierung als Datensatz zur Verfügung gestellt werden.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Ein Kapazitätsplanungswerkzeug bietet einen besonders hohen Nutzungsgrad, wenn die Kapazitätsprognosen in einem Format zur Verfügung gestellt werden, das die Daten auf einem mobilen Gerät oder - sozusagen - von unterwegs betrachtet werden können. Viele Geräte sind mit einem Web-Browser ausgestattet, sodass über ein Web-Interface Daten präsentiert werden können, z. B. in einem html-Format oder z. B. in einem xml-Format oder als Java-Scripte. Viele der mobilen Geräte sind entweder mit einem IOS-Betriebssystem oder mit einem Android-Betriebssystem ausgestattet. Speziell auf die Betriebssysteme abgestimmte Darstellungsweisen und Datenübermittlungen können für eine geringe Bandbreite und Auslastung des Übertragungskanals zu dem mobilen Gerät sorgen.

Besonders interessant ist es, wenn Parameter des gesamten Rechnersystems untersucht werden können und vorgestellt werden können, die wesentliche Eckpunkte des Rechnersystems widerspiegeln. Ein Rechnersystem lässt sich häufig anhand von einer überschaubaren Anzahl an Charakteristiken oder Parametern kennzeichnen bzw. beschreiben. Hierzu gehören Speicherkapazitäten, wobei diese unterteilt werden können in Arbeitsspeicher und Arbeitsspeichergrößen und in Dauerspeicher. Als Dauerspeicher bieten sich an: Festplattenspeicher, Bandspeicher oder permanente Halbleiterspeicherarrays.

Ein häufig beachteter Wert eines Rechnersystems ist die Gesamtrechenleistung des Rechnersystems. Die Gesamtrechenleistung setzt sich u. a. aus der Anzahl der Prozessorkerne und der Leistungsfähigkeit der Prozessorkerne zusammen. Die Gesamtrechenkapazität lässt sich gut als Anzahl an Rechenoperationen pro Zeiteinheit, z. B. pro Sekunde oder pro Millisekunde, bestimmen.

Ein interessanter Parameter für ein Rechnersystem ist die voraussichtliche Netzwerkbelastung, die durch die Kommunikation zwischen den Rechnern des Rechnersystems entstehen kann oder zu erwarten ist.

Ein weiterer und teilweise fundamental wichtiger Aspekt ist das Backup-Verhalten des Gesamtsystems, also der IT-Infrastruktur bzw. der Rechnereinheiten der IT-Infrastruktur. Hierzu gehören Häufigkeiten und auch die Größen und Speicherumfänge der einzelnen Backups. Ein aussagekräftiges Kapazitätsplanungswerkzeug mag zusätzlich Informationen über Speicherkapazitäten, die von Backups benötigt werden, bekanntgeben. Auch können Empfehlungen für die Häufigkeiten von Backups durch ein Kapazitätsplanungswerkzeug ausgesprochen werden.

Ein weiterer wichtiger Aspekt ist das Service-Management, z. B. anhand von Service-Level-Agreements. Weitere Leistungskennzahlen des gesamten Rechnersystems können ebenfalls als Informationsquellen genutzt werden, z. B. der mittlere Stromverbrauch, z. B. die mittlere Rechenleistung (z. B. in FLOPS) oder z. B. die mittleren Kosten eines zu speichernden GigaBytes.

Die Zuverlässigkeit des Rechnersystems spiegelt sich u. a. in ticket-handling-Daten, z. B. einer Service-Abteilung oder einer Netzwerk-Administrations-Abteilung, wieder.

Besonders vorteilhaft ist es, wenn eine der Aussagen des Kapazitätsplanungswerkzeugs darin besteht, dass alle zur Verfügung stehenden Ressourcen untereinander abgeglichen werden. Generell stehen sowohl interne Ressourcen als auch externe Ressourcen zur Verfügung. Als externe Ressourcen können z. B. Ressourcen von externen Cloud-Service-Providern betrachtet werden. Als interne Ressourcen können die einzelnen Parameter des Rechnersystems aufgeführt werden. Mit dem Begriff "interne Ressourcen" können - in einer Ausgestaltung - die eigenen Rechner bezeichnet werden, die hauseigen vorhanden sind.

Vorteilhaft sind "Innovations State Space Models", die auf mehrere Berechnungsmethoden basieren bzw. mehrere Berechnungsmethoden umfassen. Mit anderen Worten, ein Satz von Berechnungsmethoden kann als Modell zusammengefasst sein. Sind Auswahlkriterien bekannt, zwischen den verschiedenen Berechnungsmethoden diejenige auszuwählen, die bezüglich eines bestimmten Parameters das beste Prognoseergebnis präsentiert, so kann mit einem "Innovations State Space Model" für mehrere, verschiedene Parameter des Rechnersystems ein jeweils parameterabhängiges Berechnungsergebnis präsentiert werden.

Eine Möglichkeit der Ermittlung, welche Berechnungsmethode für den jeweiligen Parameter die günstigste Berechnungsmethode ist, besteht darin, zunächst eine Berechnung für einen vergangenen Zeitabschnitt durchzuführen, für den tatsächlich Parameterdaten vorliegen. Die errechneten Prognoseergebnisse für die Vergangenheit, sozusagen die rückblickende Prognose, werden mit den tatsächlich eingetretenen Werten der Parameter verglichen. Eine Methode der Überprüfung der rückblickend errechneten Prognoseergebnisse und der tatsächlichen Parameter besteht in der Bestimmung einer mittleren, quadratischen Abweichung. Bei der Auswahl der geeignetesten Berechnungsmethode kann bei der Berechnungsmethode, bei der die Abweichung am geringsten ist, geschlussfolgert werden, dass auch in einem unmittelbaren, zeitnahen Bereich der Zukunft ebenfalls die besten Ergebnisse ermittelt werden. Der Berechnungsmethodensatz kann als Satz von Berechnungsmethoden mit exponentieller Glättung zusammengestellt sein. Hierbei sollten Fehlerberechnungsanteile bestimmt werden. Geeignete Methoden für die Bestimmung von Fehleranteilen bestehen in der Berechnung additiver und/oder multiplikativer Fehlerberechnungsanteile.

Eine weitere Quelle von Daten und eine weitere Möglichkeit der Erhebung von Datenquellen bestehen darin, "Log-Files" zu verwenden. In vielen Rechnersystemen können unterschiedliche "Log-Files" permanent mitgeschrieben werden. Hierzu gehören z. B. "system-logs", "application-logs" und "security-logs". Die einzelnen "Log-Files" können dem Werkzeug für das "Data-Mining" angeboten werden. Die Log-Files, insbesondere große, mehrere MegaBytes oder sogar GigaBytes umfassende Log-Files, werden mit einem "Big-Data-Werkzeug" durchsucht.

Als Datenquellen für kaufmännische Daten können elektronische "files" (elektronische Dateien) der unterschiedlichsten Abteilungen eines Unternehmens oder eines Zusammenschlusses herangezogen werden. Aus kaufmännischen Datenquellen, wie Personaldaten, Auftragsdaten, Geschäftsverlaufsdaten, Einkaufsdaten, Verkaufsdaten, Produktionsdaten, Lagerhaltungsdaten, und aus sonstigen, ein Unternehmen beschreibenden Performance-Daten können Informationen extrahiert werden, die im Ergebnis technische Informationen sind.

Die Bearbeitung der Daten aus den unterschiedlichsten Datenquellen, selbst nach der Extraktion durch Data-Mining-Prozesse, kann vereinfacht werden, wenn als Zwischenschritt Metadaten erstellt werden, die insbesondere im Rahmen des "Data-Mining" verknüpft worden sind.

Besonders aussagekräftig sind die Prognosedaten, wenn die Prognosedaten, insbesondere einzeln, d. h. Parameter für Parameter, in Beziehung zu Grenzwerten aufgezeigt werden. Wird der Abstand zu einem Grenzwert in Prozent angegeben, so kann mit einem Blick sofort erkannt werden, ob ein ausreichender Abstand des Parameters bzw. der Ein-Variablen-Größe auch noch zukünftig gewährleistet ist.

Die zuvor dargestellten Kombinationen und Ausführungsbeispiele lassen sich auch in zahlreichen weiteren Verbindungen und Kombinationen betrachten.

So kann in einer Weiterentwicklung ein Schritt der Berechnung durchlaufen werden, bei dem ein "benchmark" (Leistungskennzahlen-Vergleich) zwischen den diversen Ressourcen, sowohl intern als auch extern, durchgeführt wird. Anhand der Werte für die verschiedenen benchmarks (Leistungskennzahlen-Vergleich) kann eine Plausibilität der Prognosewerte gegengeprüft werden.

Insbesondere, wenn das Werkzeug als Software-Werkzeug realisiert ist, lassen sich folgende Komponenten, Aspekte bzw. Realisierungen in dem Werkzeug implementieren:
a) Nutzung standardisierter, offener Schnittstellen und dazugehörige Verfahren, z. B. die als Standard geltende S3-Schnittstelle für Speicherungen (simple storage service);
b) eine selbstentwickelte "engine", die Teil des "CIO-Cockpits" ist;
c) eine mehrere Parameter darstellende und vorausberechnende Prognostik;
d) die Zusammenstellung von Algorithmen, durch die relevante Informationen des Rechnersystems bearbeitet werden, z. B. einzelne Kapazitätsaussagen;
e) eine Art einer Übergabe von Informationen an Dritte, z. B. durch nicht-proprietäre Schnittstellen und Protokolle;
f) eine besonders gute, weil intuitive Bedienung der Oberfläche/Schnittstelle zum Nutzer, z. B. als Software-Schnittstelle.

Die Informationen können als Dateiablagen, als E-Mails, als pdf-Dateien oder in sonst gängigen Formaten zur Verfügung gestellt werden (z. B. über eine API-Schnittstelle).

Mit dem zuvor beschriebenen Werkzeug ist es möglich, ein umfassendes Bild dem Nutzer, zum Beispiel einem für die Informationstechnologie Verantwortlichen, zur Verfügung zu stellen. Vorteilhafte Informationen sind:
a) Die eigene Infrastruktur, insbesondere in graphischen Schaubildern, darzustellen und aufzuzeigen.
b) Den Aufwand der eigenen Infrastruktur, z. B. in Bezug auf die verbrauchte Energie oder die verbrauchten Ressourcen, darzustellen.
c) Beurteilungswerkzeuge für das IT-Management zur Verfügung zu stellen.
d) Den Nutzen und den Aufwand von einzelnen Komponenten, wie z. B. von Cloud-Services, der eigenen Infrastruktur bzw. der eigenen Rechneranlage gegenüber zu stellen.

Das Werkzeug hat den Charakter eines Übersichtswerkzeugs. Das Werkzeug ist ein Übersichtswerkzeug. Zur Schaffung der Übersicht werden Abstraktionslayer gebildet. Das Werkzeug kann als so genanntes "monitoring" eingesetzt werden.

Für die verwendeten und/oder benötigten Ressourcen können Bewertungszahlen gebildet werden. Aus dem kaufmännischen Bereich ist es bekannt, Geld, CapEx-Daten, OpEx-Daten, Auf- und Abzinsungsreihen jeweils als eine (aussagekräftige) Bewertungsmaßzahl anzusehen. Aus dem Bereich der IT-Technologie bzw. der theoretischen Informatik ist es bekannt, Rechenleistungen durch Zahlen zum Ausdruck zu bringen, wie z. B. durch (Terra-)FLOPs. Korrelationen können dadurch gebildet werden, dass IT-Maßzahlen mit (klassischen) kaufmännischen Zahlen zu korrelierten Zahlen verbunden werden. In einer Ausgestaltung werden jedem Rechner eines Rechnersystems (bzw. einer Rechner-Anlage) Kosten einer Rechenoperation zugeordnet. Eine weitere Bewertungszahl ist die durchschnittliche Rechendauer bis zum Erhalt einer Rechenantwort. Beide Bewertungszahlen werden abstrahiert miteinander, z. B. über Gewichtungsfaktoren, zu einer Gesamtbewertungszahl kombiniert, die maßlos für sich alleine steht, denn die theoretische Maßzahl in Bezug auf ihre Einheiten ist schwer verständlich (z. B. Prozent Euro geteilt durch durchschnittliche Rechendauer in µs auf dem Zielserver). Obwohl die Einheiten als sinnlos angesehen werden können, stellen die maßlosen Korrelationszahlen eine Aussage über die Qualität des Rechnersystems (bzw. der Rechner-Anlage) dar.

Der Nutzer kann Szenarien entwerfen, indem er services, applications und/oder appliances probeweise verlagert, um so die voraussichtlich neuen Bewertungszahlen den bisherigen Bewertungszahlen des Rechnersystems (bzw. der Rechner-Anlage) gegenüberzustellen. Möchte der Nutzer nichts verlagern, so kann er das Werkzeug als "monitoring"-Werkzeug einsetzen.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein Systemschaubild einer ersten Ausführungsform mit Hardware-Elementen und mit logischen bzw. softwaregesteuerten Elementen zeigt,
Figur 2 einen beispielhaften Interaktionsplan von geeigneten DataMapper-Komponenten zeigt,
Figur 3 eine Parameterdarstellung mit Darstellung von Werten in der Vergangenheit und auch in der Zukunft zeigt,
Figur 4 eine übersichtliche Visualisierung einer Kapazitätsprognose als IOS-App zeigt,
Figur 5 eine Parameterdarstellung innerhalb einer IOS-App zeigt,

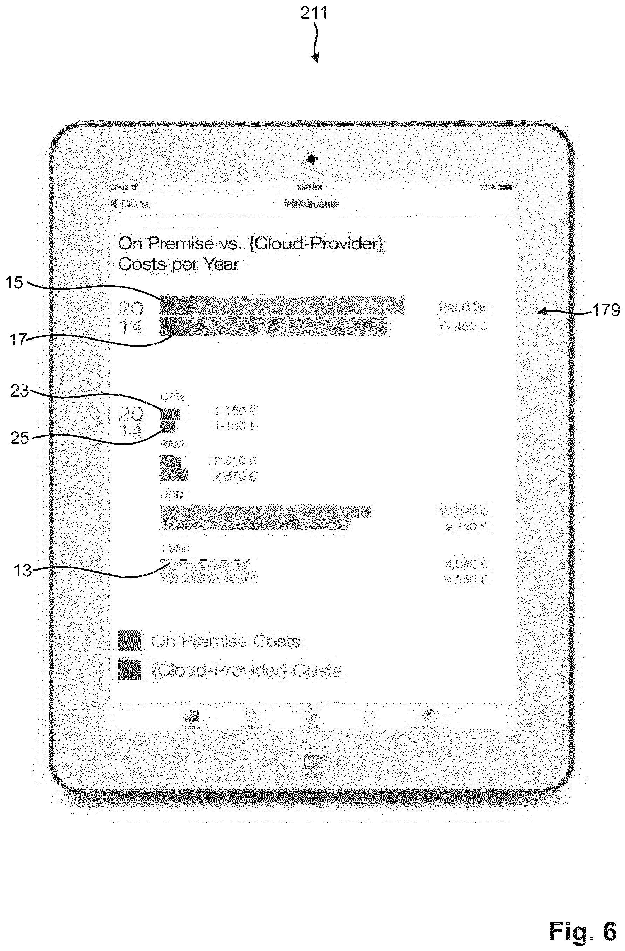

Figur 6 eine weitere, insbesondere Android-App zeigt,
Figur 7 einen Vergangenheits- und Prognosewertverlauf, insbesondere für eine Speichernutzung, zeigt,
Figur 8 einen Vergangenheits- und Prognosewertverlauf, insbesondere in relativen Werten, zeigt,
Figur 9 einen Vergangenheits- und Prognosewertverlauf, insbesondere für eine Rechenleistung, zeigt,
Figur 10 verschiedene Cloud-Service-Provider mit ihren Service-Paketen zeigt,
Figur 11 eine Überblicksdarstellung zum ITSM (IT service management) zeigt,
Figur 12 eine detailliertere Darstellung zum ITSM anbietet und
Figur 13 eine Überblicksdarstellung zur vorhandenen Infrastruktur zeigt.

### Figurenbeschreibung

Die in den einzelnen Figuren gezeigten Ausgestaltungsmöglichkeiten lassen sich auch untereinander in beliebiger Form verbinden.

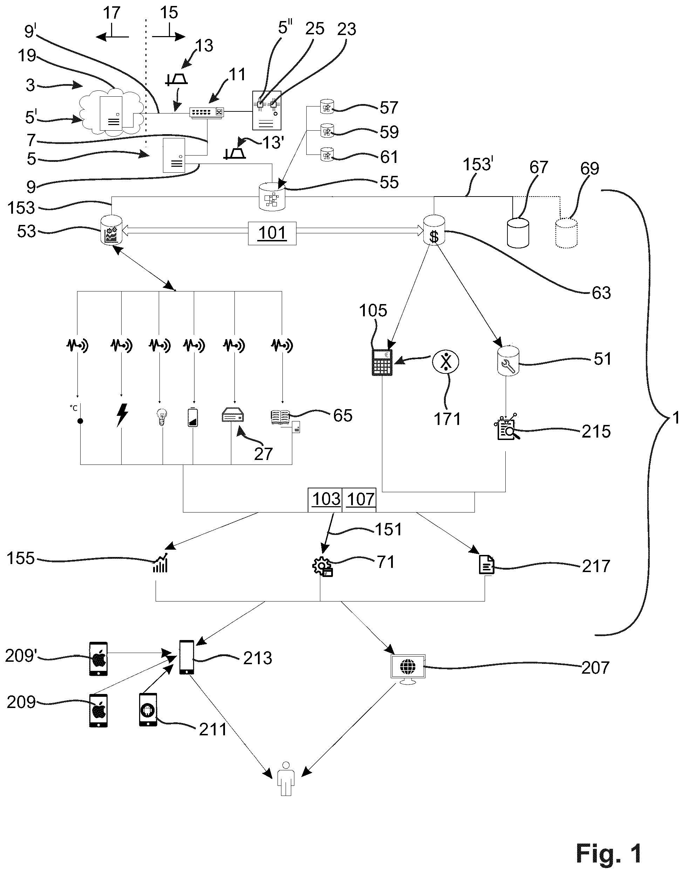

Figur 1 zeigt ein Schaubild eines möglichen Rechnersystems 5, 5^{I}, 5", das aus hardwaretypischen bzw. hardwareähnlichen Teilen und aus logischen Teilen, die günstigerweise softwaremäßig realisiert werden, aufbaubar ist. Rechner eines Rechnersystems wie des ersten Rechnersystems 5 können aber auch virtuell realisiert sein. In diesem Fall wirken die Rechner (von außen betrachtet) wie physikalisch vorhandene Rechner, sie sind aber rein softwaremäßig auf einer Virtualisierungsplatform realisiert.

Das Werkzeug 1 in Gestalt eines Kapazitätsplanungswerkzeuges oder eines Kapazitätsanalysewerkzeuges nutzt Daten wie Log-Files 55 einer IT-Infrastruktur 3. Zur IT-Infrastruktur 3 gehören Rechnersysteme 5, 5^{I}, 5^{II}, die verteilt angeordnet sind. Zwischen den Rechnersystemen 5, 5^{I}, 5^{II} sind Netzwerkverbindungen wie die Netzwerkverbindung 11 zwischen dem ersten Rechnersystem 5 und dem zweiten Rechnersystem 5^{I}. Somit hat jedes Rechnersystem 5, 5^{I}, 5^{II} Netzwerkanschlüsse 7, 9, 9^{I}. In Abhängigkeit des Netzwerkanschlusses 7, 9, 9^{I} (Netze können umfassen: öffentliches Netz, Gigabyte-Netz, LTE-Netz, Glasfaserstandleitung etc.) bietet die Netzwerkverbindung 11 eine Netzwerkbandbreite 13. Die Netzwerkbandbreite 13 hängt von der Art des Netzwerkanschlusses 7, 9, 9^{I} ab. Das zweite Rechnersystem 5^{I} ist eine Rechnerstruktur in der Cloud. Dieser Service kann von einem Cloud-Service-Provider 19 zur IT-Infrastruktur 3, bestehend aus eigenen Rechnersystem 5, 5^{II}, hinzugenommen werden. Durch solche Netzwerke gibt es Bereiche des Rechnersystems 5, 5^{I}, 5^{II} mit höherer Bandbreite 13^{I} und Bereiche mit niedriger Bandbreite 13. Ein solches Rechnersystem 5^{II} umfasst eine größere Anzahl Prozesskerne 23, 25, auf denen unterschiedlichste services (auch geschrieben: "Services") ablaufen können. Es kann auch gesagt werden, die IT-Infrastruktur 3 setzt sich aus internen Ressourcen 15 (hauseigenen Ressourcen 15) und externen Ressourcen 17 zusammen. Hierbei lässt sich die Gewichtung variieren, welche services aus der Cloud eines Cloud-Service-Providers 19 als Rechnersystem 5^{I} der IT-Infrastruktur 3 integriert werden (z. B. in Abhängigkeit der Anforderungen: Verlässlichkeit, Geschwindigkeit, Backupfrequenz, Speichergrößen, Entfernung zum Cloud-Dienst, Standorte der Cloud-Dienste, Betriebskosten usw.).

Mit anderen Worten, die Charakteristik, die Parameter und die Eigenschaften der einzelnen Netzwerkbereiche sind abhängig von den (Sub-)Rechnerstrukturen der Rechnersysteme 5, 5^{I}, 5^{II}.

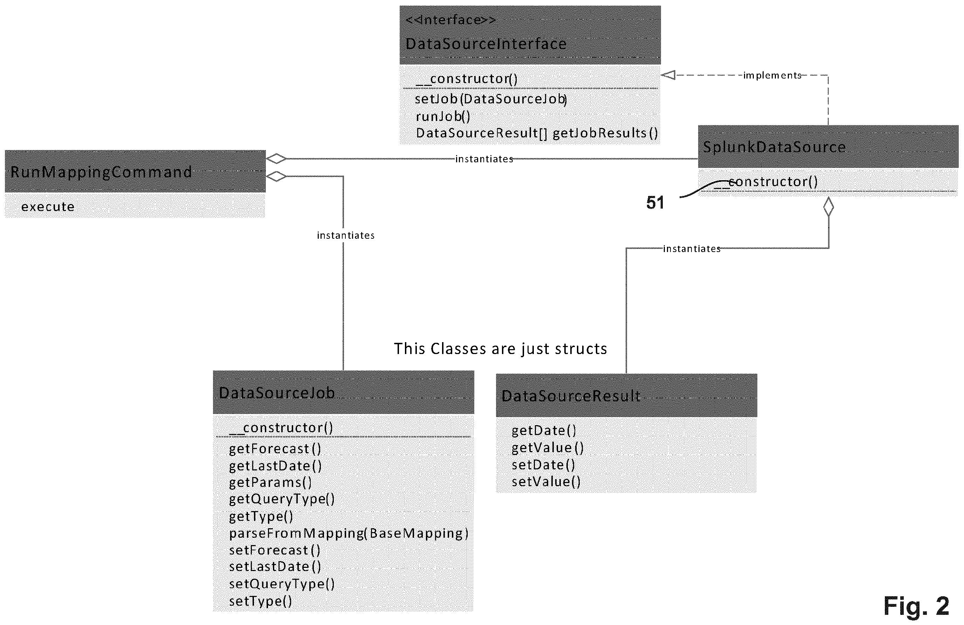

Die IT-Infrastruktur 3 bietet, insbesondere archivierende, Log-Files 55, die z. B. auch über die Netzwerkanschlüsse wie den Netzwerkanschluss 9 abrufbar sind. Die Log-Files 55 lassen sich der Art nach unterteilen. Zu den Log-Files 55 gehören wenigstens ein System-Log-File 57, das also System-Daten archeviert, mindestens ein Application-Log-File 59, das also Daten zu den applications archiviert, und mindestens ein Security-Log-File 61, das Daten über Sicherheitsereignisse archiviert. Diese hardwarebezogenen Daten, die in Form von Log-Files 55 vorliegen, sind eine Quelle für das sowohl in Figur 1 als auch in Figur 2 gezeigte Data-Mining 51. Wie in Figur 1 zu sehen ist, werden den (Gesamt-)Log-Files 55 weitere Daten wie die sensorischen Daten 53 hinzugesetzt. Neben diesen hardwarebezogenen Datenquellen greift das Werkzeug 1 auf weitere Datenquellen zu, wie z. B. auf die kaufmännische Datenquelle 63, auf die Service-Level-Agreements 67, insbesondere der ersten Art, und auf die Service-Level-Agreements 69, insbesondere der zweiten Art. Wie sich aus den strichlierten Linien ergibt, können noch weitere Datenquellen hinzugenommen werden. In die hardwarebezogenen Daten 53 gehen auch weitere Datenquellen wie Daten des Prozessorkerns 27 und Daten eines ERP-Systems 65 (enterprise resource planning-systems) ein. Obwohl ERP-Systeme 65 häufig als kaufmännische Datenquellen 63 angesehen werden, bieten sie Informationen zu hardwarebezogenen Daten 53, z. B. im Fall einer Produktionsplanung und -steuerung.

In einem Korrelationsmodul 101 werden Abhängigkeiten und Zusammenhänge zwischen den unterschiedlichsten Datenquellen, wie z. B. zwischen den kaufmännischen Datenquellen 63 und den hardwarebezogenen Daten 53 hergestellt. Das Korrelationsmodul 101 zeigt Abhängigkeiten zwischen Daten aus den kaufmännischen Datenquellen 63 und den hardwarebezogenen Daten 53 auf. Weitere Informationen, die eingehen können, sind Informationen von, über oder zu dem Cloud-Service-Provider 19. Die so zur Verfügung stehenden Daten können über eine Data-Mining 51 durch einen Datenerhebungsprozess 215 geschleust werden. Parallel oder zusätzlich wird ein Berechnungsmethodensatz 105 angewendet, durch den Rechenoperationen 171, wie z. B. Kreuzproduktbildungen, auf die Daten, insbesondere des Korrelationsmoduls 101, ausgeübt werden. Der Berechnungsmethodensatz 105 mit seinen Rechenoperationen 171 schafft eine erste Stufe ausgewerteter Daten, die von den Rohdaten aus den kaufmännischen Datenquellen 63 und den hardwarebezogenen Daten 53 eine komprimierte Variante schaffen.

Mit Hilfe von zukunftsprognostizierenden Rechnungsmethoden wie einem Innovations State Space Model 103 oder zusätzlich bzw. alternativ Methoden mittlerer quadratischer Abweichung 107 werden Berichte 217, insbesondere in normierter Weise produziert. Darüber hinaus bietet das Werkzeug 1 die Möglichkeit, ticket-Handling-Daten 71 zur Verfügung zu stellen, z. B. in dem Fall, dass Kapazitätsengpässe im Rahmen von Kapazitätsprognosen 151 vorhergesehen werden. Besonders aufschlussreich sind die aus dem Innovations State Space Model 103 abgeleiteten Zukunftsdaten 155.

Die so erhaltenen Daten lassen sich auf die unterschiedlichsten Arten und Weisen visualisieren. Eine Darstellungsweise ist ein Web-Interface 207. Besonders interessant sind Mobile-Access-Daten 213, die in Form von einer oder mehreren IOS-Apps 209, 209^{I} oder als eine Android-App 211 zur Verfügung gestellt werden können.

Einem durch eine Figur symbolisch in Figur 1 dargestellten Nutzer steht es frei, über welches Interface 207 oder welche App 209, 209^{I}, 211 er die Daten bzw. die Datensätze 153, 153^{I} der internen Ressourcen 15 und der externen Ressourcen 17 komprimiert und in korrelierender Weise betrachten möchte.

Figur 2 zeigt einzelne Instanzen und Klassen eines DataMapper, der Splunk-Daten, die im Rahmen eines Data-Mining 51 erhoben worden sind, in geeigneter Weise mapped, vorzugsweise in eine SQL-Datenbank. Die SQL-Datenbank stellt anschließend die Daten für weitere Bearbeitungen, z. B. durch ein "Innovations State Space Model" (vgl. das Innovations State Space Model 103 in Figur 1), zur Verfügung. Einzelne Instanzen werden in beispielhafterweise in den Containern aufgelistet. Ausgehend von dem SplunkDataSource-Constructor wird das Data-Mining 51 über die Schnittstelle DataSourcelnterface erhoben, um über den Container RunMappingCommand in einer geeigneten Datenbank abzulegen.

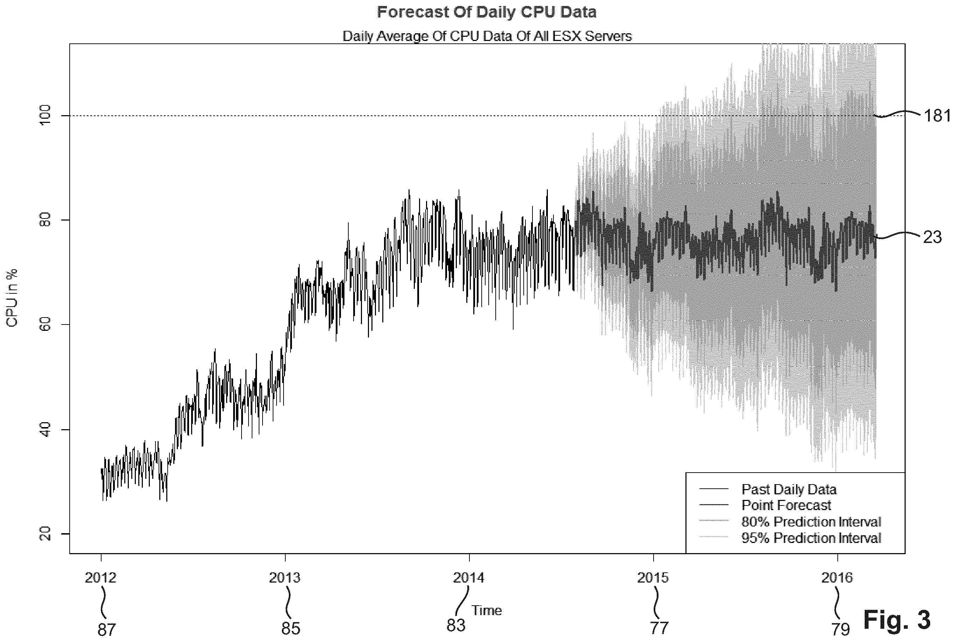

Möchte ein Nutzer einzelne Parameter eingehender analysieren, wie z. B. die Auslastung des ersten Prozessorkerns 23, so bietet eine Darstellung, wie jene in Figur 3, einen schnellen, guten Überblick. Der Kurvenverlauf entstammt sensorisch aufgenommenen Daten (vgl. die Zusammenstellung sensorischer Daten 53 nach Figur 1). Dementsprechend hat der Kurvenverlauf starke Steigungsabschnitte, d. h. Abschnitte mit positiver Steigung und Abschnitte mit negativer Steigung bzw. Gefälle. Es werden Daten zu zukünftigen Zeitpunkten wie zum Zeitpunkt τ₁ 77 und zum Zeitpunkt τ₂ 79 vorgestellt. Mit den Prognosewerten wird auch eine Streuung oder Varianz angedeutet. Daten der Vergangenheit werden ebenfalls bezüglich der Auslastung des Prozessorkerns 23 angezeigt. So werden Daten zum Zeitpunkt τ-₁ 83, Daten zum Zeitpunkt τ-₂ 85 und Daten zum Zeitpunkt τ-₃ 87 dargestellt. Hieraus ist abzuleiten, dass im Laufe der Jahre die Prozessorauslastung zwar von 30 Prozent auf 80 Prozent des (maximal akzeptablen) Grenzwertes 181 angestiegen ist, sich aber zum Zeitpunkt τ-₁ 83 stabilisiert hat. Nun ist es recht unwahrscheinlich, dass eine Überschreitung des Grenzwertes 181, der als Grenze mit 100 Prozent abgebildet ist, der akzeptablen Prozessorleistung erreicht wird.

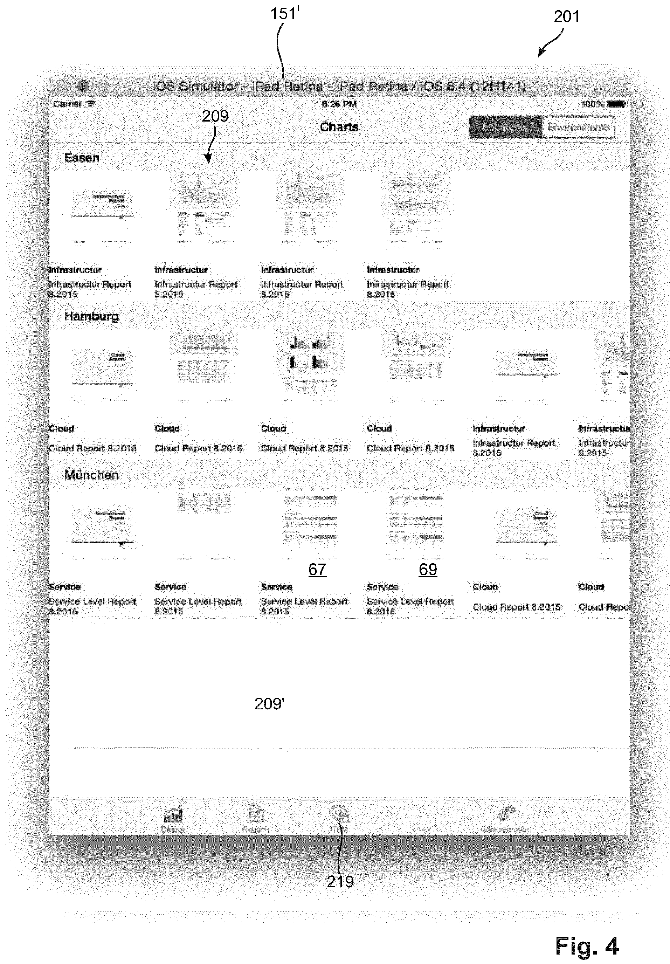

Figur 4 zeigt eine überblicksmäßig dargestellt Kapazitätsprognose 151^{I}, die für unterschiedlichste Standorte, z. B. für die (abgebildeten) Unternehmensstandorte Essen, Hamburg und München, in wenigen ansprechbaren "reports" die Situation der Standorte in Bezug auf deren IT-Infrastruktur 3 (vgl. Figur 1) darstellt. Es handelt sich um eine IOS-App 209'. Diese App 209' dient als zentrale Auswahlstelle (i. S. e. Hauptmenus), um in weitere Apps wie die App 209 zur Darstellung von Storage-Verläufen zu gelangen. Die Überblicksdarstellung der Kapazitätsprognose 151 offeriert als einen ersten Typ der Visualisierung 201 eine komprimierte Darstellung von Daten von Service-Level-Agreements 67, 69. Auch wird eine Darstellung in der Form einer Interactive Time Series Modeling 219 angeboten.

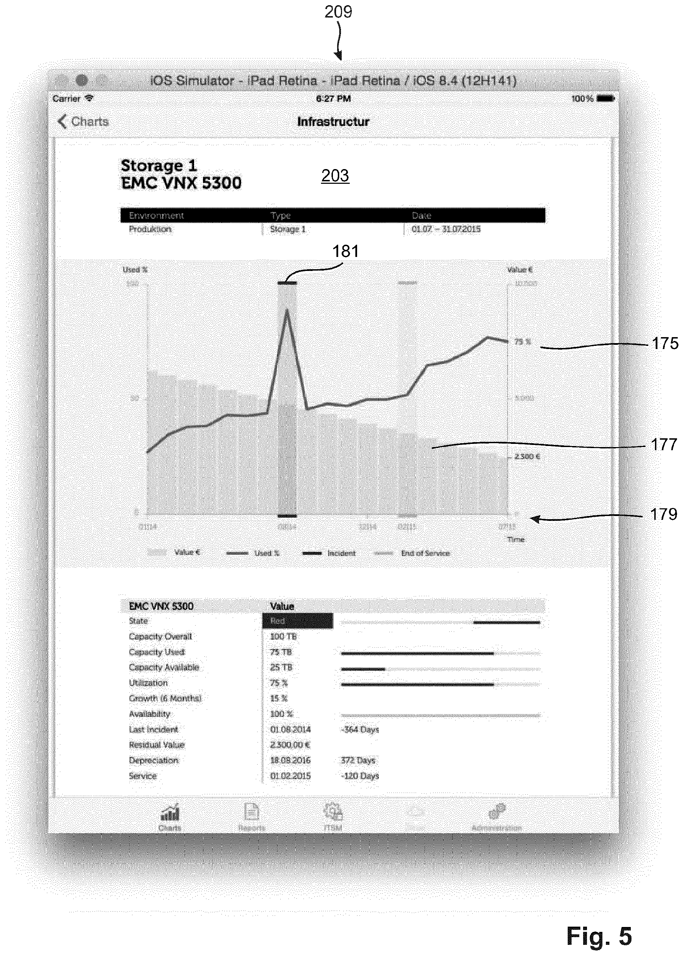

Figur 5 zeigt eine IOS-App 209 bezüglich der Speichernutzung ein Storagesystem innerhalb eines Monats, beispielhaft des Monats Juli. Es wird eine Kapazitätsverteilungsprognose 179 zu dem Storage dargestellt. Der Betrachter sieht die jeweils genutzten Storagemengen in Bezug zu einem Grenzwert 181. D. h., es wird die Backupspeicherkapazität 175 auf einer zeitlichen Basis aufgetragen dargestellt. Als weitere Information in der Visualisierung 203 werden BackupSpeicherhäufigkeiten 177 bekannt gegeben.

Möchte ein Nutzer einzelne Parameter eingehender analysieren, wie z. B. die Auslastung des ersten Prozessorkerns 23, so bietet eine Darstellung, wie jene in Figur 3, einen schnellen, guten Überblick. Der Kurvenverlauf entstammt sensorisch aufgenommenen Daten (vgl. die Zusammenstellung sensorischer Daten 53 nach Figur 1). Dementsprechend hat der Kurvenverlauf starke Steigungsabschnitte, d. h. Abschnitte mit positiver Steigung und Abschnitte mit negativer Steigung bzw. Gefälle. Es werden Daten zu zukünftigen Zeitpunkten wie zum Zeitpunkt τ₁ 77 und zum Zeitpunkt τ₂ 79 vorgestellt. Mit den Prognosewerten wird auch eine Streuung oder Varianz angedeutet. Daten der Vergangenheit werden ebenfalls bezüglich der Auslastung des Prozessorkerns 23 angezeigt. So werden Daten zum Zeitpunkt τ-₁ 83, Daten zum Zeitpunkt τ-₂ 85 und Daten zum Zeitpunkt τ-₃ 87 dargestellt. Hieraus ist abzuleiten, dass im Laufe der Jahre die Prozessorauslastung zwar von 30 Prozent auf 80 Prozent des (maximal akzeptablen) Grenzwertes 181 angestiegen ist, sich aber zum Zeitpunkt τ-₁ 83 stabilisiert hat. Nun ist es recht unwahrscheinlich, dass eine Überschreitung des Grenzwertes 181, der als Grenze mit 100 Prozent abgebildet ist, der akzeptablen Prozessorleistung erreicht wird.

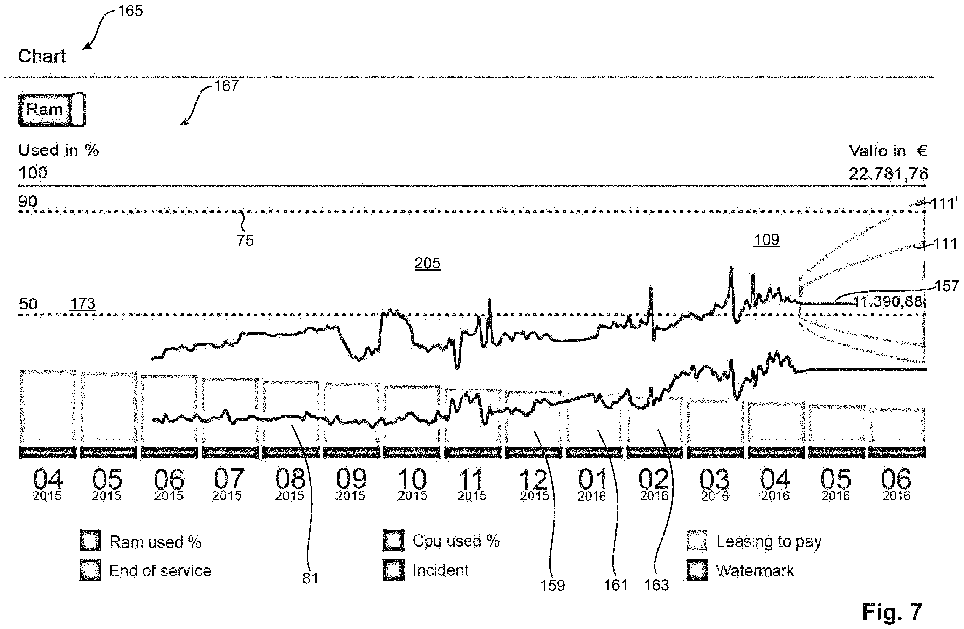

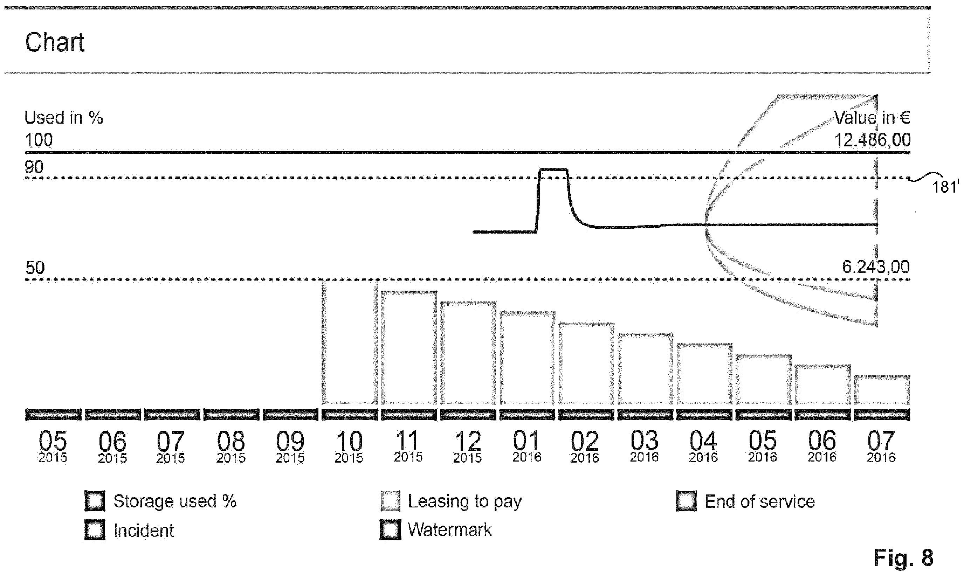

Figur 7 zeigt eine Visualisierung 205, durch die Dauerspeicherkapazitäten 167 als eine Rechnersystemcharakteristik 165 sowohl für die Vergangenheit (siehe Bezugszeichen 81, 159, 161, 163) als auch für die Zukunft (siehe Set 157 einer Ein-Variablen-Größe) grafisch aufbereitet dargestellt werden. Die Zukunftsdaten werden durch exponentielle Glättungsmethoden 111, 111^{I} mit unterschiedlichen Glättungen in die Zukunft prognostiziert. Für die Glättungen werden Kapazitätsanforderungen 159, 161, 163 zu unterschiedlichen Zeitpunkten in die Berechnung eingeführt. Damit lässt sich die Arbeitsspeicherauslastung 173 für die Vergangenheit nachzeichnen und für die Zukunft prognostizieren. Die aktuellen Daten werden im Aktualitätsbereich 109 dargestellt. Die Berechnungen basieren darauf, dass das Rechnersystem 5, 5^{I}, 5" soweit bekannt ist, dass allgemeine Verfügbarkeitsdaten 75 in die Berechnung eingehen können. Die Daten können, so wie in Figur 8 dargestellt, leicht in anderen Sprachen (von z. B. Spanisch in Englisch) und in anderen Darstellungsvarianten, z. B. mit einem geänderten Grenzwert 181^{I}, präsentiert werden.

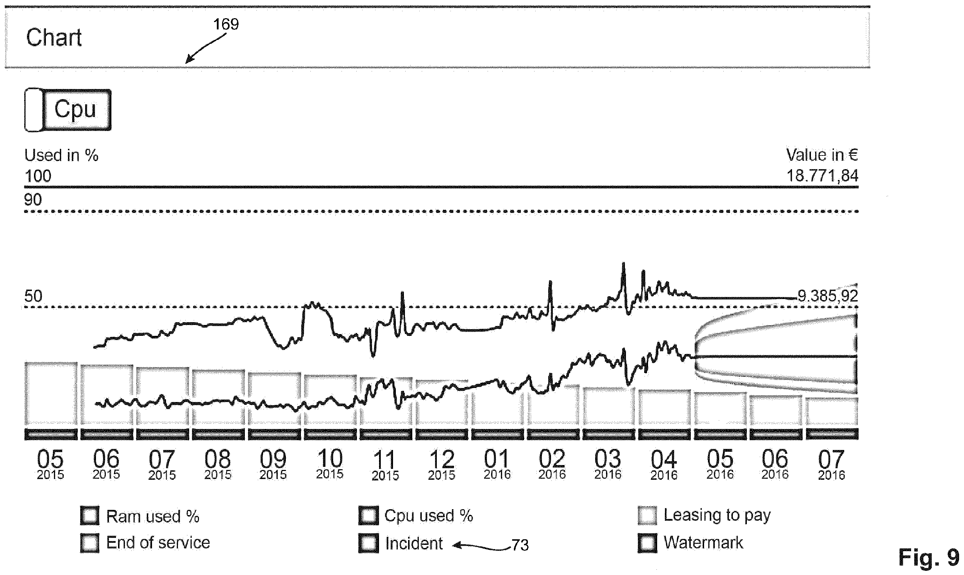

Figur 9 zeigt eine mit den Figuren 7 und 8 vergleichbare Darstellung, diesmal aber in Bezug auf die Berechnungskapazität 169 und dabei aufgetretene Incidents 73.

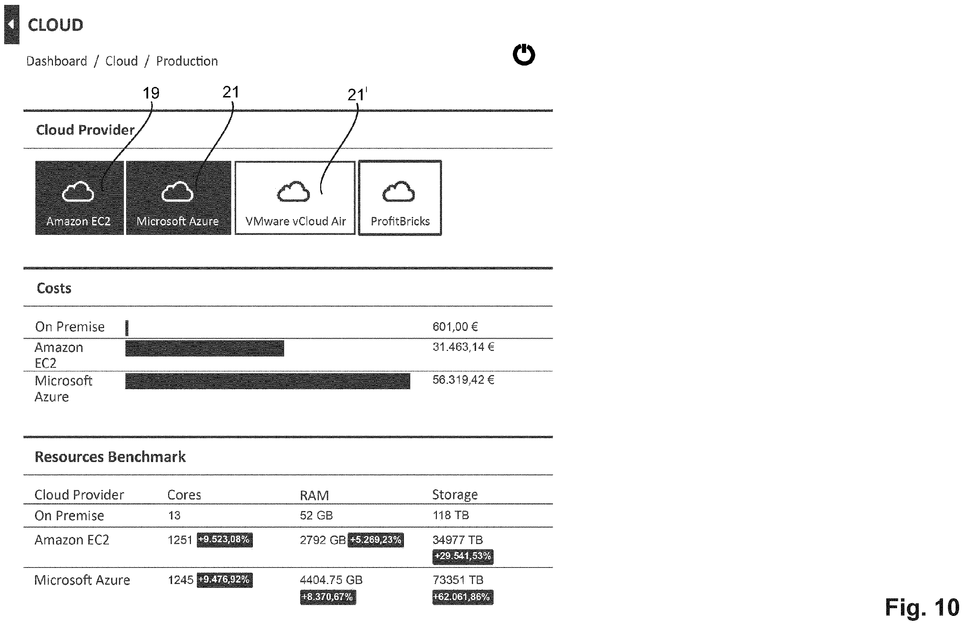

Figur 10 zeigt die Daten von ausgewählten Cloud-Service-Providern 19, 21. Weitere Cloud-Service-Provider 21^{I} stehen als alternative Anbieter und als alternative Auswahlmöglichkeit ebenfalls zur Verfügung. Die IT-Infrastruktur 3 (siehe Figur 1) wird mit den unterschiedlichen Cloud-Service-Providern 19,21,21^{I} leistungsmäßig, kaufmännisch und technisch durchgerechnet.

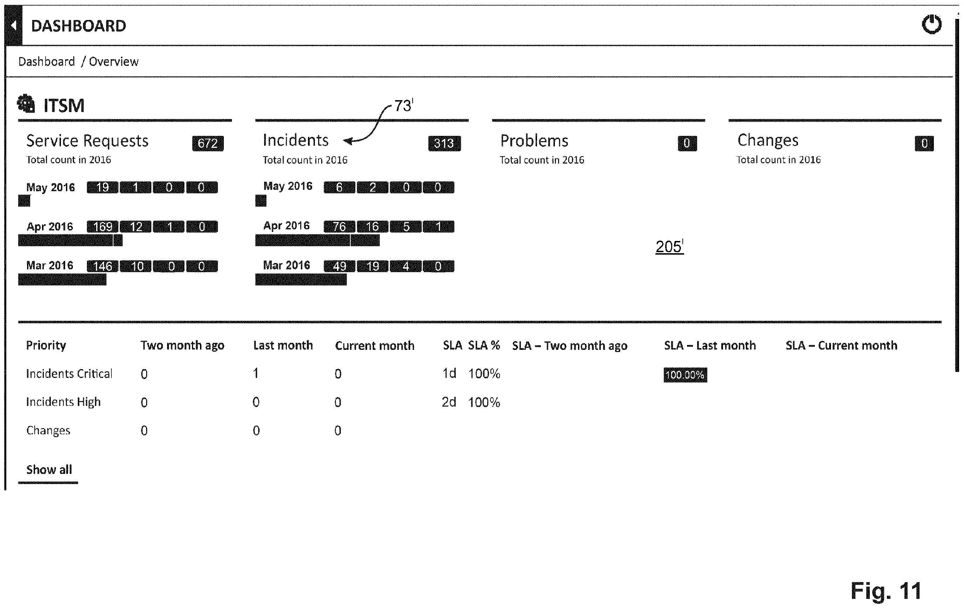

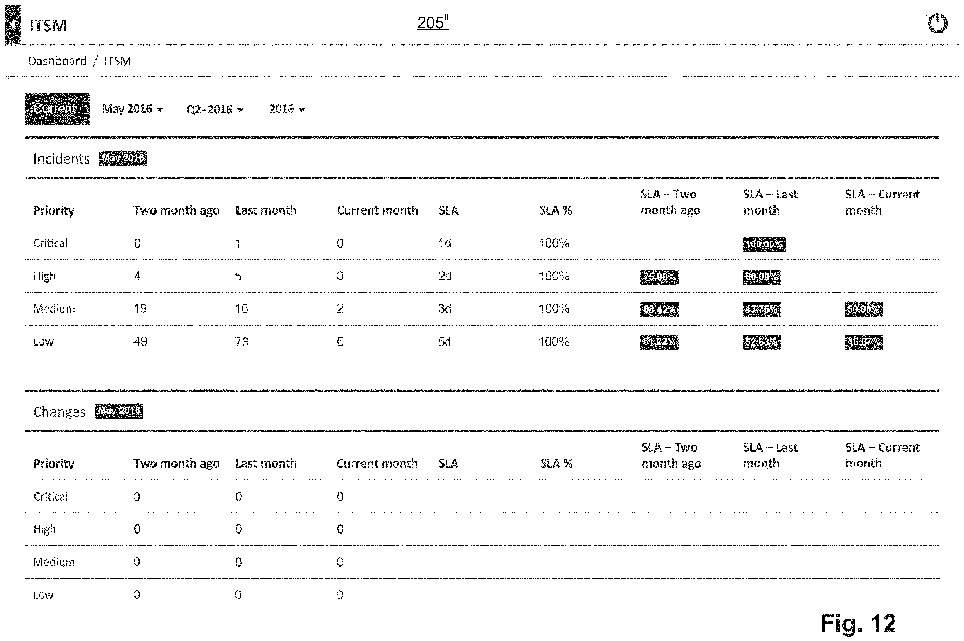

Wie in Figur 11 zu sehen ist, können als ITSM-Daten nach einzelnen "Service Requests" und auch nach einzelnen Incidents 73^{I} aufgeschlüsselt visualisiert werden, z. B. in einer Visualisierung 205^{I}. Sollen die Daten weiter differenziert werden, bietet sich eine Visualisierung 205" gemäß Figur 12 zur Darstellung der Einzelheiten des ITSM an.

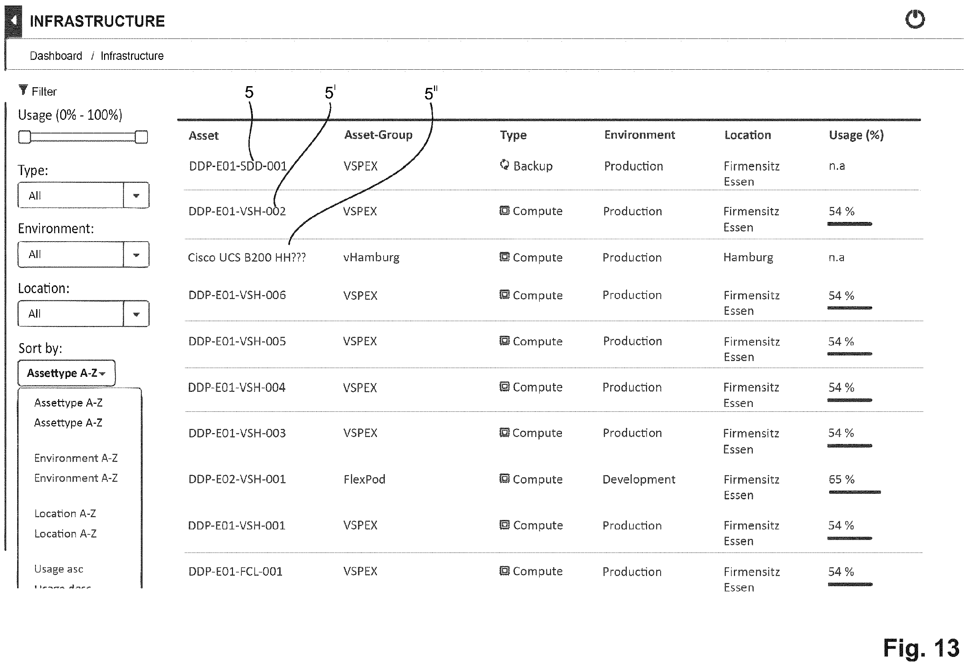

In Figur 13 werden Gegenüberstellungen der einzelnen Infrastrukturdaten der Rechnersysteme 5, 5^{I}, 5^{II} tabellarisch sichtbar gemacht.

Obwohl in Fällen einer IT-Infrastruktur mit hohem Datenanfall ein "Data-Mining"-Werkzeug eingesetzt werden muss, wie z. B. Splunk, um zunächst Daten für weitere Prognosen erheben zu können, schafft das Kapazitätsplanungswerkzeug es, auf wenige, aussagekräftige Parameter die Aussagen der zukünftigen Auslastung des Rechnersystems zurückzuführen.

### Bezugszeichenliste

- 1: Kapazitätsplanungswerkzeug bzw. Kapazitätsanalysewerkzeug
- 3: Infrastruktur,
- 5, 5^{I}, 5^{II}: Rechnersystem
- 7: erster Netzwerkanschluss
- 9,9^{I}: zweiter Netzwerkanschluss
- 11: Netzwerkverbindung
- 13, 13^{I}: Netzwerkbandbreite
- 15: Ressource, insbesondere interne Ressource
- 17: Ressource, insbesondere externe Ressource
- 19: erster Cloud-Service-Provider
- 21, 21^{I}: zweiter Cloud-Service-Provider
- 23: erster Prozessorkern
- 25: zweiter Prozessorkern
- 27: dritter Prozessorkern

- 51: Data-Mining, insbesondere Data-Mining-Prozess
- 53: Daten, insbesondere hardwarebezogene Daten wie sensorische Daten
- 55: Log-File
- 57: system-log-file
- 59: application-log-file
- 61: security-log-file
- 63: kaufmännische Datenquelle
- 65: ERP-System
- 67: Service-Level-Agreement, insbesondere erster Art
- 69: Service-Level-Agreement, insbesondere zweiter Art
- 71: ticket-handling-Daten
- 73, 73^{I}: Daten zur Vorfallsbehandlung
- 75: Verfügbarkeitsdaten
- 77: Daten zum Zeitpunkt τ₁
- 79: Daten zum Zeitpunkt τ₂
- 81: Daten zum Zeitpunkt τ₃
- 83: Daten zum Zeitpunkt τ-₁
- 85: Daten zum Zeitpunkt τ-₂
- 87: Daten zum Zeitpunkt τ-₃
- 101: Korrelationsmodul
- 103: Innovations State Space Model
- 105: Berechnungsmethodensatz
- 107: Methode der mittleren quadratischen Abweichung
- 109: Aktualitätsbereich
- 111: exponentielle Glättungsmethode

- 151, 151^{I}: Kapazitätsprognose
- 153, 153^{I}: Datensatz
- 155: Zukunftsdaten
- 157: Set, insbesondere Set von Ein-Variablen-Größen
- 159: Kapazitätsanforderung zum Zeitpunkt τ₁
- 161: Kapazitätsanforderung zum Zeitpunkt τ₂
- 163: Kapazitätsanforderung zum Zeitpunkt τ₃
- 165: Rechnersystemcharakteristik
- 167: Dauerspeicherkapazität
- 169: Berechnungskapazität
- 171: Rechenoperation
- 173: Arbeitsspeicherauslastung
- 175: Backupspeicherkapazität
- 177: Backupspeicherhäufigkeit
- 179: Kapazitätsverteilungsprognose
- 181, 181^{I}: Grenzwert, insbesondere zu einer Ein-Variablen-Größe

- 201: Visualisierung, insbesondere erster Typ einer Visualisierung
- 203: Visualisierung, insbesondere zweiter Typ einer Visualisierung
- 205, 205^{I}, 205^{II}: Visualisierung, insbesondere dritter Typ einer Visualisierung
- 207: Web-Interface
- 209, 209^{I}: IOS-App
- 211: Android-App
- 213: Mobile-Access-Daten
- 215: Datenerhebungsprozess, insbesondere skriptbasierter Prozess
- 217: Bericht, insbesondere normierter Bericht
- 219: Interactive Time Series Modeling

## Patentansprüche

1. Kapazitätsanalyse- und -planungswerkzeug (1),
insbesondere für mehrmonatige Kapazitätsprognosen (151),
einer Informationstechnologie-Anlage wie einer Informationstechnologie-Infrastruktur (3), die hauseigene Ressourcen (15), insbesondere als Teil eines Rechnersystems (5, 5^{II}), umfasst,
wobei durch das Werkzeug (1) sensorische Daten (53) des Rechnersystems (5, 5^{II}) aufnehmbar sind und
für eine Visualisierung (201, 203, 205, 205^{I}, 205^{II}) aufbereitet werden können,
**dadurch gekennzeichnet, dass**
hardwarebezogene Daten (53) des Rechnersystems (5, 5^{II}) und kaufmännische Datenquellen (63) des Rechnersystems (5, 5^{I}, 5^{II}) sowie Ressourcen von Cloud-Service-Providern (19, 21, 21^{I}) aufgenommen werden,
um eine Korrelation (101) zwischen den hardwarebezogenen Daten (53), den kaufmännischen Datenquellen (63) und den Ressourcen der Cloud-Service-Provider (19, 21, 21^{I}) herzustellen und
diese Korrelation komprimiert in einem Format für die Visualisierung (201, 203, 205, 205^{I}, 205^{II}) als Datensatz zur Verfügung zu stellen.

2. Kapazitätsanalyse- und -planungswerkzeug (1) nach Anspruch 1, **dadurch**
**gekennzeichnet, dass**
der Datensatz für eine Web-Interface, eine IOS-App (209, 209'), eine Android-App (211) und/oder als Daten eines Mobile-Access zur Verfügung steht.

3. Kapazitätsanalyse- und -planungswerkzeug (1) nach einem der vorhergehenden
Ansprüche, **dadurch gekennzeichnet, dass**
der Datensatz Zukunftsdaten zu einzelnen Parametern des Rechnersystems enthält, wie z. B. Kapazitätsanforderungen, insbesondere zu ausgewählten Zeitpunkten (77, 79, 83, 85, 87), an wenigstens eine der nachfolgenden Rechnersystemcharakteristiken:
a) Dauerspeicherkapazitäten wie Festplattenspeichergrößen, Bandspeichergrößen oder Halbleiterspeicherarraygrößen,
b) Berechnungskapazitäten wie Anzahl an Prozessorkernen (23, 25, 27) und/oder Rechenoperationen pro Zeiteinheit,
c) Arbeitsspeicherauslastungen (173),
d) Netzwerkbandbreiten (13) und Anzahl an Netzwerkanschlüssen (7, 9, 9^{I}),
e) Backupspeicherkapazitäten (175) und/oder Backupspeicherhäufigkeiten (177).

4. Kapazitätsanalyse- und -planungswerkzeug (1) nach einem der vorhergehenden Ansprüche, **dadurch gekennzeichnet, dass**
zu einer Quelle von kaufmännischen Daten Informationen aus einer der nachfolgenden Informationsquellen gehören:
a) Kosten wenigstens eines externen Cloud-Service-Providers,
b) die Anzahl und/oder die Art der einzelnen Service-Level-Agreements (SLA),
c) Leistungskennzahlen (KPI) des Rechnersystems,
d) ticket-handling-Daten,
e) Daten zu Vorfallsbehandlungen (Incident Management),
f) Verfügbarkeitsdaten wie Verfügbarkeitszeiten des Rechnersystems.

5. Kapazitätsanalyse- und -planungswerkzeug (1) nach einem der vorhergehenden Ansprüche, **dadurch gekennzeichnet, dass**
eine Kapazitätsverteilungsprognose (179) zwischen externen Ressourcen (17) wie Cloud-Service-Providern und internen Ressourcen (15) des Rechnersystems erstellbar ist.

6. Kapazitätsanalyse- und -planungswerkzeug (1), insbesondere nach einem der vorhergehenden Ansprüche, **dadurch gekennzeichnet, dass**
Parameter zur Identifikation eines Rechnersystems, wie z. B. einer mehrere Rechnerkerne und/oder Recheneinheiten umfassende Großrechenanlage oder Rechenzentrum, als ein Set von Ein-Variablen-Größen nach einem Data-Mining-Prozess (51), insbesondere nach einem skriptbasierten Datenerhebungsprozess, durch ein, vorzugsweise lineares, Gleichungssystem eines Innovations State Space Models einer zukünftigen Zeitbasis zugeordnet werden.

7. Kapazitätsanalyse- und -planungswerkzeug (1) nach einem der vorhergehenden Ansprüche, **dadurch gekennzeichnet, dass**
eine Berechnung prognostizierender Werte durch eine Auswahl einer Berechnungsmethode aus einem Berechnungsmethodensatz erfolgt, insbesondere durch einen Vergleich von Prognoseergebnissen, die durch verschiedene Berechnungsmethoden aus Daten für vergangene Zeitabschnitte abgeleitet worden sind, z. B. durch Bestimmung einer mittleren quadratischen Abweichung, mit tatsächlichen Daten, die aus einem zeitnahen Aktualitätsbereich stammen.

8. Kapazitätsanalyse- und -planungswerkzeug (1) nach Anspruch 7, **dadurch**
**gekennzeichnet, dass**
zu dem Berechnungsmethodensatz exponentielle Glättungsmethoden gehören, insbesondere Methoden mit additiven und/oder multiplikativen Fehlerberechnungsanteilen.

9. Kapazitätsanalyse- und -planungswerkzeug (1) nach einem der vorhergehenden
Ansprüche, **dadurch gekennzeichnet, dass**
für das Ermitteln von den hardwarebezogenen Daten und/oder als kaufmännische Datenquellen Log-Files, wie system-logs, application-logs und/oder security-logs, von dem Rechnersystem und/oder von mehreren Recheneinheiten dem Data-Mining-Prozess (51) zur Verfügung gestellt werden.

10. Kapazitätsanalyse- und -planungswerkzeug (1) nach einem der vorhergehenden
Ansprüche, **dadurch gekennzeichnet, dass**
als kaufmännische Datenquellen Personaldaten, Daten aus Auftragsbüchern und/oder Daten von Geschäftsverläufen, z. B. Performance-Daten, genutzt werden, die vorzugsweise aus ERP-Systemen bezogen werden.

11. Kapazitätsanalyse- und -planungswerkzeug (1) nach einem der vorhergehenden
Ansprüche, **dadurch gekennzeichnet, dass**
hardwarebezogene Daten und kaufmännische Datenquellen über Metadaten im Rahmen des Data-Mining (51) verknüpft werden.

12. Kapazitätsanalyse- und -planungswerkzeug (1) nach einem der Ansprüche 6 bis 11,
**dadurch gekennzeichnet, dass**
zu wenigstens zwei Größen, vorzugsweise zu jeder Größe, des Sets aus Ein-Variablen-Größen jeweils ein Grenzwert (181) vorhanden ist, zu dem ein prozentualer Abstand des Parameters oder des zu visualisierenden Datensatzes errechnet wird.

13. Verfahren zur Kapazitätsanalyse und/oder Kapazitätsplanung, insbesondere durch ein Werkzeug nach einem der vorhergehenden Ansprüche,
das eine Informationstechnologie-Anlage charakterisiert,
indem sensorische Daten eines Rechnersystems, insbesondere nativ, aufgenommen werden,
die für eine Visualisierung aufzubereiten sind,
**dadurch gekennzeichnet, dass**
hardwarebezogene Daten des Rechnersystems (5, 5^{I}, 5^{II}), kaufmännische Daten des Rechnersystems (5, 5^{II}) sowie Daten (63) zu Ressourcen von Cloud-Service-Providern (19, 21, 21^{I}) aufgenommen werden,
um eine Korrelation zwischen den hardwarebezogenen Daten, den kaufmännischen Datenquellen (63) und den Daten zu den Ressourcen der Cloud-Service-Provider (19, 21, 21^{I}) herzustellen,
und anschließend diese Korrelation komprimiert in einem Format für die Visualisierung als Datensatz zur Verfügung gestellt wird.
